# EUROPEAN PATENT APPLICATION

(11) **EP 4 715 605 A1**
(43) Date of publication of application: **25.03.2026**
(21) Application number: 25200120.1
(22) Date of filing: 04.09.2025
(51) Int. Cl.: G06F 12/02, G11C 15/00, G06F 16/22, G06F 18/00, G01S 13/931

(54) **BIN-BASED SAMPLING OF RADAR DETECTIONS**

(30) Priority: 17.09.2024 US 202418887597
(71) Applicant: NXP B.V., 5656 AG Eindhoven (NL)
(72) Inventor: Fatseas, Konstantinos, 5656AG Eindhoven (NL); Pandharipande, Ashish, 5656AG Eindhoven (NL); Sanberg, Willem Pieter, 5656AG Eindhoven (NL); Daalderop, Gerardus Henricus Otto, 5656AG Eindhoven (NL); Alkanat, Tunc, 5656AG Eindhoven (NL)
(74) Representative: Colaiuda, Antonella

(57) **Abstract**

A technique of identifying features of objects in a physical environment of a set of radar sensors includes accessing a plurality of bin identifiers assigned to respective radar detections made by the set of radar sensors, the bin identifiers specifying respective bins. A bin has at least (i) a first dimension representing a range of distance values and (ii) a second dimension representing a range of Doppler values. The technique further includes selecting radar detections based on the bin identifiers, the selecting producing a plurality of samples, and processing the plurality of samples to determine one or more features of the objects.

## Description

### BACKGROUND

This disclosure is directed generally to radar (Radio Detection and Ranging) techniques, and more particularly to radar processing using bin-based sampling.

Radar systems have found widespread applications in vehicles, robotics, and other technologies that perform environmental sensing. For example, a vehicle may be equipped with millimeter wave (mmWave) radar sensors, which may be positioned and oriented to detect objects in the environment. The sensors emit high-frequency electromagnetic signals and receive back radar detections, such as reflections and other signal content. Signalprocessing circuitry digitizes the radar detections and compares them with emitted signals to generate a radar point cloud, i.e., a three-dimensional spatial map of the vehicle's environment.

Points in the radar point cloud represent radar detections and have certain attributes. Examples of these attributes include position (e.g., x-y-z coordinates), time, distance (also called "range"), Doppler (radial velocity toward or away from the sensors), and radar cross section (RCS), which indicates intensity of detections and is suggestive of the material of the reflector, such as metal, wood, or plastic.

In some implementations, computers process radar detections using multiple encoders, where each encoder performs a sampling operation on radar detections followed by a grouping operation that identifies groups of radar detections that surround the samples. The samples and groups are then processed to identify features of objects in the environment.

### BRIEF DESCRIPTION OF THE SEVERAL VIEWS OF THE DRAWINGS

The foregoing and other features and advantages will be apparent from the following description of particular embodiments, as illustrated in the accompanying drawings, in which like reference characters refer to the same or similar parts throughout the different views. The drawings are not necessarily to scale, emphasis instead being placed upon illustrating the principles of various embodiments.
FIG. 1 is a block diagram of an example radar system in which embodiments of the improved technique can be practiced.
FIG. 2 is a flowchart showing example activities that may be performed by the radar system of FIG. 1 according to one or more embodiments.
FIG. 3 is a graph of an example Distance-Doppler map of radar detections that shows example bins in which the radar detections are located, according to one or more embodiments.
FIG. 4 is a partial graph of an example Distance-Doppler map extended to include at least one additional dimension for at least one of elevation angle, azimuth angle, and time, according to one or more embodiments.
FIG. 5 is a series of tables that show an example bin-based sampling technique according to one or more embodiments.
FIG. 6 is a partial graph of an example Distance-Doppler map that shows an example bin-based grouping technique according to one or more embodiments.
FIG. 7 is a partial graph of an example Distance-Doppler map that shows an example parallel-processing technique according to one or more embodiments.
FIG. 8 is a flowchart showing an example method of setting the size of bins according to one or more embodiments.
FIG. 9 is a flowchart showing an example method of identifying features of objects, according to one or more embodiments.
FIG. 10 is a graph showing an example comparison of bin-based sampling to farthest-point sampling.

### DETAILED DESCRIPTION

Farthest point sampling (FPS) has become a de facto standard for sampling by encoders in radar systems, given its ability to represent a radar scene with high uniformity. A "radar scene" refers to a radar point cloud or any modified version thereof, such as a tagged point cloud, a segmented point cloud, or any portion of a larger point cloud. FPS proceeds by randomly selecting a first point in a scene and then selecting a second point farthest from the first point, i.e., having the greatest Euclidian distance from the first point (e.g., in x-y-z coordinates) of all of the other points in the scene. A third point is then selected as the sample farthest from both the first point and the second point. Additional points are then selected, one after another, as the farthest points from all of the previously selected points. The process continues until a desired number of points has been selected. Grouping then proceeds by identifying points within a desired Euclidian distance of each sampled point.

Despite its advantages, FPS can be inefficient, as it requires many distance calculations. Computers commonly used in radar applications have limited processing power, and the many distance calculations required by FPS can consume a substantial share of maximum throughput. Some of these computers employ coprocessors, such as vector processors, GPUs (graphical processing units), or TPUs (tensor processing units), for accelerated calculations. However, distance calculations are typically excluded from accelerated processing due to incompatibilities or additional workloads required for preparing such calculations for coprocessor execution. Computers can thus become overly taxed. What is needed, therefore, is a more computationally efficient approach to sampling.

The above need is addressed at least in part by an improved technique of sampling radar detections in a radar scene. The technique includes assigning bin identifiers (BIDs) to radar detections based at least in part on distance (range) values and Doppler (radial velocity) values associated with the radar detections. The BIDs uniquely identify respective bins having at least a distance dimension and a Doppler dimension. The technique further includes selecting detections based on BIDs, such as selecting one detection per BID, two detections per BID, or the like. Uniform sampling across the entire radar scene can thus be achieved. Advantageously, sampling can proceed without the need for large numbers of distance calculations, as required by FPS, or even necessarily any distance calculations at all, thus reducing the workloads of computers. Less powerful computers can be used, or existing computers can be loaded with additional useful tasks. Also, the improved technique is easily parallelizable, as selecting samples from one bin can be performed independently of selecting samples from other bins. The improved technique provides further advantages during grouping, as groups may be formed based on BIDs rather than based on distance calculations.

Embodiments of the improved technique will now be described. One should appreciate that such embodiments are provided by way of example to illustrate certain features and principles but are not intended to be limiting.

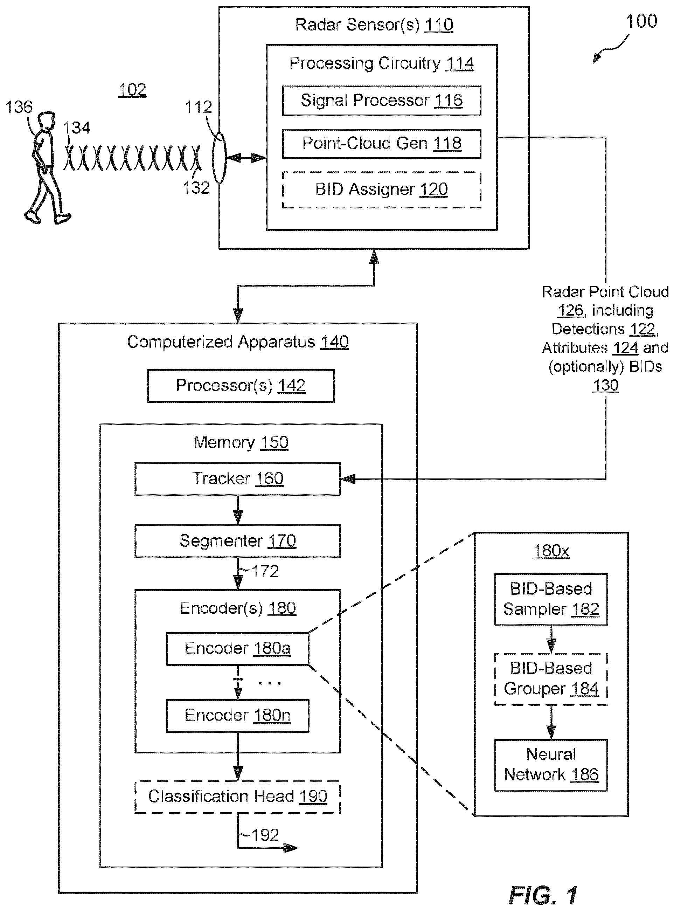

FIG. 1 shows an example radar system 100 in which embodiments of the improved technique can be practiced. Here, the radar system 100 includes a set of radar sensors 110 (i.e., one or more radar sensors) communicatively coupled to a computerized apparatus 140, such as by cabling or wireless technology, e.g., Bluetooth, Wi-Fi, wireless CAN (controller area network), or the like. A single radar sensor 110 is shown by example, but any number of radar sensors 110 may be provided.

The radar sensor 110 includes a transceiver 112, such as an antenna configured to send and/or receive RF (radio frequency) signals, and processing circuitry 114. In some arrangements, the transceiver 112 is configured both to send radar signals 132 and to receive radar signals 134, e.g., signals that reflect from an object 136 in a physical environment 102 of the sensor 110. In other arrangements, separate antennas are provided for sending and for receiving. For purposes of illustration, the processing circuitry 114 is assumed to be common to all radar sensors, including all transmitting and receiving antennas, although other arrangements are possible. All such arrangements are intended to fall within the scope of the disclosure.

The processing circuitry 114 includes various hardware and software components configured to generate and receive RF signals, to perform signal processing, and to extract attributes. These components are depicted herein as a signal processor 116 and a point-cloud generator 118. The signal processor 116 is arranged to perform both analog and digital signal processing. The point-cloud generator 118 is arranged to identify radar detections 122, to determine attributes 124 of the detections 122, and to provide the detections 122 as points in a radar point cloud 126, i.e., a spatial representation of the detections 122. Attributes 124 typically include distance, Doppler, RCS, and time. Depending on transceiver configuration, attributes 124 may further include elevation angle and/or azimuth angle. In some examples, the point-cloud generator 118 is natively configured to measure spatial locations in polar coordinates (e.g., distance, elevation, and azimuth) and to convert these polar coordinates to Cartesian coordinates, e.g., coordinates in x-y-z space.

According to one or more embodiments, the processing circuitry 114 further includes a BID assigner 120. The BID (bin identifier) assigner 120 may be realized, for example, as a software construct running on a processor (not shown) of the processing circuitry 114, as firmware, as part of a hardware device such as an ASIC (application-specific integrated circuit), or as any combination thereof. The BID assigner 120 is configured to assign BIDs 130 to radar detections 122, such as those represented in the radar point cloud 126 or other radar scene.

According to one or more embodiments, the BID assigner 120 assigns BIDs 130 to radar detections 122 based on distance (range) and Doppler attributes determined by the point-cloud generator 118. For example, an expected full-scale range of possible distance values is divided into distance ranges of uniform size, such as 1-meter ranges, 5-meter ranges, 10-meter ranges, or the like. Similarly, an expected full-scale range of Doppler values is divided into Doppler ranges of uniform size, such as 5 kilometer per hour (km/h) ranges, 10 km/h ranges, 15 km/h ranges, or the like. Ranges of non-uniform size may be provided alternatively.

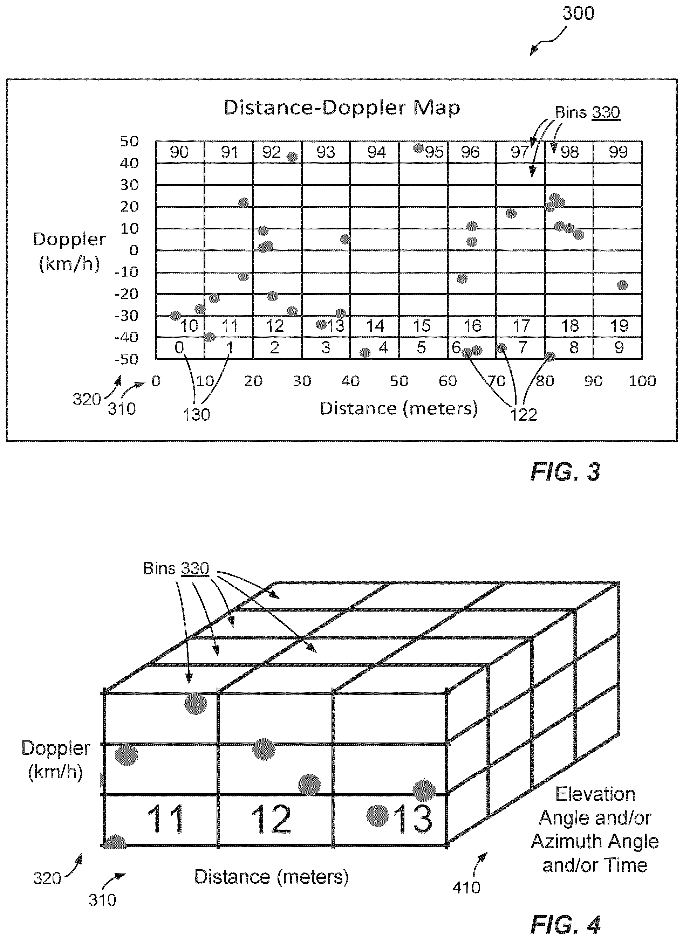

In an example, each range of distance values is associated with multiple ranges of Doppler values, and each range of Doppler values is associated with multiple ranges of distance values. A Distance-Doppler map (FIG. 3) may thus be constructed as a two-dimensional representation of Distance-Doppler space, with intersecting ranges of distance and Doppler ranges forming respective, two-dimensional bins. For example, each bin corresponds to a respective range of distance values and to a respective range of Doppler values. Preferably, the sizes of the bins in each dimension exceeds the resolution of the sensor 110 in the respective dimension. For example, each bin may be large enough to accommodate 10, 100, or 1000 different distance values, as well as 10, 100, or 1000 different Doppler values. These are merely examples provided for illustration.

According to one or more embodiments, the BID assigner 120 assigns the same BID 130 to all radar detections 122 found within the same bin of Distance-Doppler space. All radar detections 122 assigned to the same bin, and thus having the same BID 130, have roughly similar values of distance and Doppler.

The BID assigner 120 is shown in dashed lines because its presence in the sensor 110 is optional. For example, the BID assigner 120 may alternatively be placed in the computerized apparatus 140. Because distance values are readily available within the sensor 110, however, placement of the BID assigner 120 in the sensor 110 is generally preferred. For example, if placed within the computerized apparatus 140, the BID assigner 120 might be required to convert distance values from x-y-z coordinates to polar coordinates, or to make explicit requests to the sensor 110 to provide the distance values. These requirements are avoided by placing the BID assigner 120 within the sensor 110.

As further shown in FIG. 1, the computerized apparatus 140 includes a set of processors 142 and memory 150. In an example, the set of processors 142 includes one or more processing chips and/or assemblies, such as one or more CPUs (central processing units), vector processors, GPUs, TPUs, or the like. The memory 150 may include both volatile memory, e.g., RAM (Random Access Memory), and non-volatile memory, such as one or more ROMs (Read-Only Memories), disk drives, solid state drives, and the like. The set of processors 142 and the memory 150 together form control circuitry, which is constructed and arranged to carry out various methods and functions as described herein. Also, the memory 150 includes a variety of software constructs realized in the form of executable instructions. When the set of processors 142 run the executable instructions, the set of processors 142 carry out the operations defined by the software constructs. Although certain software constructs are specifically shown and described, it is understood that the memory 150 typically includes many other software components, which are not shown, such as an operating system, various applications, processes, and daemons.

According to one or more embodiments, the memory 150 of the computerized apparatus 140 "*includes*," i.e., realizes by execution of software instructions, a tracker 160, a segmenter 170, a set of encoders 180, and a classification head 190. The tracker 160 is configured to identify objects in a radar point cloud 126, e.g., based on similarity in location and velocity, and to assign object identifiers to detected objects. In some examples, the tracker 160 is further configured to construct virtual bounding boxes around identified objects and to follow the identified objects over time.

The segmenter 170 is configured to separate the radar point cloud 126 into multiple segmented point clouds 172, such as one segmented point cloud 172 for each object identified by the tracker 160. Trackers and segmenters are known in the art and need not be described further.

The set of encoders 180 typically includes multiple encoders 180a through 180n in a cascaded arrangement, with an individual encoder referred to herein as 180x. Each encoder 180x is constructed and arranged to perform sampling and grouping, and to produce point features that represent aspects of objects in the physical environment 102. Typically, the set of encoders 180 includes at least three encoders, but any number of encoders may be provided, including a single encoder.

The classification head 190 is configured to receive point features from the set of encoders 180 and to provide output in the form of class labels 192. For example, the class labels 192 may identify a detected object 136 as a pedestrian, a two-wheeler, a car, or a truck. In an example, the classification head 190 is implemented using a neural network, such as a convolutional neural network.

A vehicle, robot, or other apparatus equipped with the radar system 100 may use the class labels 192 in any suitable way. For example, a vehicle equipped with the radar system 100 may render a driver display in which class labels 192 are presented as respective icons placed relative to a depiction of the vehicle itself, thus providing a visual representation of the vehicle surroundings as determined by the radar system 100. As another example, the vehicle or other apparatus, such as a robot, may detect an object 136 in the physical environment 102 based on the class labels 192 and trigger a suitable response based on such detection. The response may be independent of operator input.

According to one or more embodiments, an encoder 180x of the set of encoders 180 includes a BID-based sampler 182, a BID-based grouper 184, and a neural network 186. Rather than sampling radar detections 122 using farthest-point sampling (FPS), which involves many distance calculations and can be computationally expensive, the BID-sampler 182 is instead configured to perform sampling based on BIDs 130. For example, the BID-based sampler 182 is configured to access BIDs 130 assigned to radar detections 122 in a radar scene and to select radar detections 122 from among the BIDs 130 in an unbiased manner, such as by selecting one radar detection 122 per BID, two radar detections 122 per BID, or the like. As different BIDs 130 correspond to different ranges of distance and Doppler, selecting samples based on BIDs 130 results in uniform sampling of the radar scene. Such uniform sampling provides similar benefits as FPS but without the high computational cost.

According to one or more embodiments, the BID grouper 184 is configured to group radar detections 122 based on BIDs 130. For example, the BID grouper 184 may form a group based on a sample by including within the group all of the radar detections 122 having the same BID 130 as the sample. Thus, distance calculations for both sampling and grouping are minimized or avoided altogether. One should appreciate, though, that one or more embodiments may provide a BID sampler 184 with a conventional grouper, such as one that determines group membership using distance calculations. Thus, the BID grouper 186 may be regarded as optional.

Within the encoder 180x, samples and groups are provided as input to the neural network 186, which is configured to generate point features based on the samples and groups. For example, the point features may be features of the object 136. Such features may correspond to physically observable characteristics, but they may also (or alternatively) reflect correlations, convolutions, and/or other combinations among various attributes of radar detections 122.

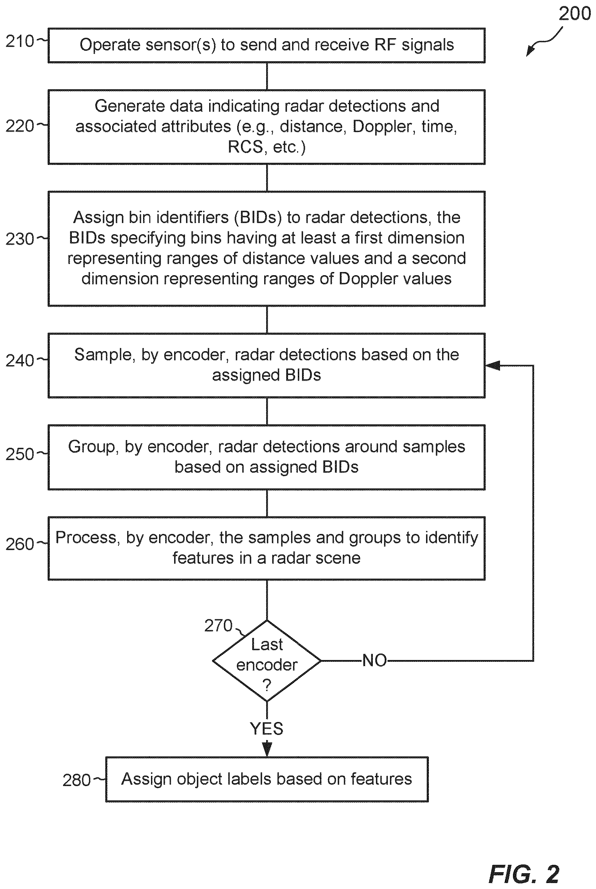

FIG. 2 shows an example method 200 of operating a radar system, such as the radar system 100 depicted in FIG. 1. Various acts of the method 200 may be performed, for example, by the set of sensors 110 or by the computerized apparatus 140, or by both the set of sensors 110 and the computerized apparatus 140.

At 210, the set of sensors 110 is operated to send RF signals 132 and to receive RF signals 134. The received signals 134 may include reflections of the sent RF signals 132 from objects 136 in the physical environment 102.

At 220, data is generated which indicates radar detections 122 and associated attributes 124. For example, the set of sensors 110 identifies radar detections 122 and assigns attributes 124 to the radar detections 122 for distance, Doppler, time, and RCS. In some examples, the set of sensors 110 further assigns attributes 124 for elevation angle and/or azimuth angle. The set of sensors 110 arranges the radar detections 122 and attributes 124 in a radar point cloud 126, which may be provided, for example, as a data structure such as an array or tensor.

At 230, bin identifiers (BIDs) 130 are assigned to radar detections 122. The assigned BIDs 130 specify bins having at least a first dimension representing ranges of distance values and a second dimension representing ranges of Doppler values. Preferably, the task of assigning BIDs 130 to detections 122 is performed by the set of sensors 110, but it may alternatively be performed by the computerized apparatus 140.

At 240, a first encoder 180a samples radar detections 122 based on the assigned BIDs 130. For example, the encoder 180a running on the computerized apparatus 140 chooses a plurality of samples from radar detections 122 in a radar scene by selecting radar detections across different BIDs 130. Preferably, selections are made in an unbiased manner, such as by selecting one radar detection per BID, two radar detections per BID, or the like. In cases where the same BID 130 is assigned to multiple radar detections 122 (i.e., where multiple detections 122 are located in the same bin), selecting one or more detections for the BID 130 may be performed pseudorandomly. For example, assume that the same BID 130 is assigned to ten different detections 122. Such detections may be placed on a list, and the list may be shuffled, e.g., using a shuffle method commonly found in certain computer languages, such as Python. The first detection in the shuffled list may then be taken as a pseudorandomly selected sample for the BID 130. If N samples per BID are desired, the first N detections in the shuffled list may be taken as N pseudorandomly selected samples. One should appreciate that the shuffle method is merely a simple example, as there are many other ways of pseudorandomly selecting items from a list, any of which are intended to be covered by this disclosure. Moreover, embodiments are not limited to pseudorandom sampling of radar detections within the same bin. For instance, samples may be acquired in other ways, such as by sorting radar detections 122 according to a particular dimension (e.g., distance, Doppler, elevation, azimuth, time, etc.) and selecting the detection whose value is maximum along the sorted dimension.

At 250, the first encoder 180a groups radar detections 122 around samples of the plurality of samples based on assigned BIDs 130. For instance, assuming that ten different detections 122 are assigned to the same BID 130, as above, a group may be formed from those ten detections. The group may be associated with the sample that was selected pseudorandomly for that BID 130.

At 260, the encoder 180a processes the samples and groups to identify features in the radar scene. For example, the encoder 180a applies the plurality of samples and the associated groups to the neural network 186, which generates point features.

At 270, the computerized apparatus 140 determines whether the current encoder 180a is the last encoder among the encoders 180a through 180n. If not, the method 200 returns to step 240, whereupon sampling (240), grouping (250), and processing (260) proceed for the next encoder, 180b. The method 200 continues in this manner until sampling, grouping, and processing are completed for the last encoder 180n, at which point operation proceeds to 280, whereupon the classification head 190 processes accumulated results from the encoders 180a through 180n and assigns a class label 192, which may identify a type of the detected object, such as a pedestrian, car, or some other type of object.

FIG. 3 shows an example Distance-Doppler map 300 according to one or more embodiments. As shown, the Distance-Doppler map 300 has two dimensions, a first dimension representing distance 310, e.g., with values ranging from 0 to 100 meters, and a second dimension representing Doppler 320, e.g., with values ranging from -50 km/h to +50 km/h. These ranges are merely examples. Various radar detections 122 appear as dots on the Distance-Doppler map 300, with each radar detection 122 having a distance value and a corresponding Doppler value. A sparse arrangement of radar detections 122 is depicted for ease of understanding, but one should appreciate that Distance-Doppler maps are typically more densely filled with radar detections 122 than shown.

The Distance-Doppler map 300 includes multiple bins 330, with each bin representing a range of distance values, such as a 10-meter range, and a corresponding range of Doppler values, such as a 10 km/h range. In the depicted example, each bin 330 covers a rectangular region. A total of 100 bins is shown.

According to one or more embodiments, each of the bins 330 has a unique BID 130. For example, a first bin 330 (lower left) has a BID 130 of 0, and BIDs increase by one from left to right and in rows from bottom to top, up to a maximum of 99 at the upper right.

The specific manner of assigning BIDs 130 may be varied. For example, BIDs 130 may increase from top to bottom, or from right to left, rather than from bottom to top and left to right, as shown. They may increase by increments other than one. Preferably, though, BIDs 130 are assigned to bins 330 in a deterministic manner, such as by a convention or equation, so that it is possible to determine the BIDs of adjacent bins 330 based on the BID of a current bin.

Although FIG. 3 shows BIDs 130 as being assigned to bins 330, this is merely for illustration, as in practice BIDs are normally assigned instead to radar detections 122. For example, a BID 130 is assigned to a radar detection 122 based on the distance and Doppler values of that radar detection 122. As a specific example, if a detection 122 has a distance value of 43 m and a Doppler value of -47 km/h, then the detection 122 may be assigned a BID of 4, as BID=4 covers the two-dimensional region that includes the detection 122. It is thus evident that detections 122 falling within the same bin 330 have the same BID 130, while detections 122 falling within different bins have different BIDs 130.

FIG. 4 shows a portion of the Distance-Doppler map 300 extended to include an additional dimension. For example, a third dimension 410 represents elevation angle, azimuth angle, or time. Any number of additional dimensions may be provided. Each additional dimension of the Distance-Doppler map 300 adds a dimension to the bins 330 and typically multiplies the total number of bins 330, and thus the total number of possible BIDs 130. For example, if a third dimension 410 corresponds to altitude angle, assigning BIDs to detections 122 is based not only on distance and Doppler, but also on altitude. If a fourth dimension is added for azimuth angle, assigning BIDs to detections 122 is based not only on distance, Doppler, and altitude, but also on azimuth, and so on.

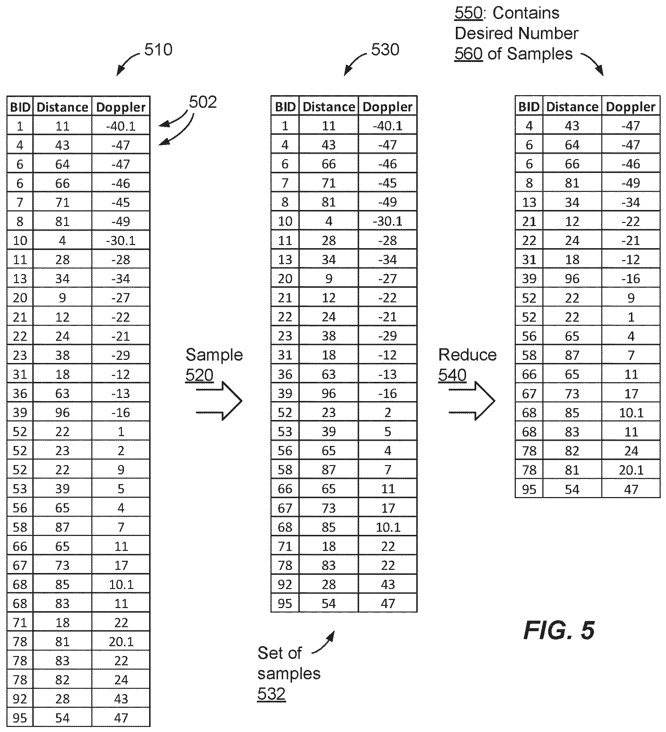

FIG. 5 shows an example arrangement for sampling radar detections 122 according to one or more embodiments. Such sampling may be performed, for example, by the BID sampler 182 of FIG. 1.

Starting at the left of the figure, table 510 shows distance (range) and Doppler values of radar detections 122, along with associated BIDs 130. Each row 502 of Table 510 represents a different detection 122. Collectively, the rows 502 represent 32 detections 122, which is the total number of detections 122 shown in FIG. 3.

The detections 122 in Table 510 are sampled (520) to produce sampling results shown in Table 530. It is observed that Table 510 (above) includes multiple detections 122 for certain BIDs (e.g., 6, 52, 68, and 78). Here, however, the sampling 520 in this example pseudorandomly selects a single detection 122 for such BIDs for inclusion in Table 530. The results of sampling 520 is a set of samples 532, which includes a total of 26 samples.

In some examples, the BID sampler 182 (FIG. 1) is configured to select a desired number of samples 560, such as 20 samples. To achieve the desired number of samples 560, the set of samples 532 is reduced (540) to the desired number of samples 560 by pseudorandomly removing samples from the set of samples 532 until the desired number 560 is reached. Example reduced results are shown in Table 550. One should appreciate that reduction 540 should be performed pseudorandomly to avoid biasing the samples that remain.

If the BID sampler 182 acquires fewer than the desired number of samples 560 (e.g., based on selecting one detection per BID), a second detection may be selected from each bin 330 that has a second detection, and similarly if needed for larger numbers of detections, until the desired number 560 is reached. If adding detections 122 per BID causes the total number of samples to exceed the desired number 560, samples may be removed pseudorandomly, as described above, to reach the desired number 560. If adding detections 122 still does not reach the desired number 560, samples may be repeated pseudorandomly to achieve the desired number 560.

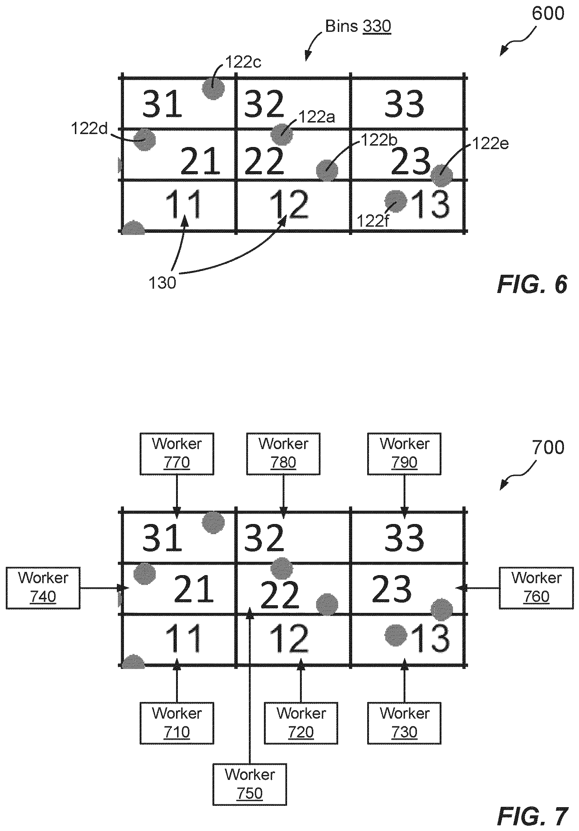

FIG. 6 shows a portion of the Distance-Doppler map 300 (FIG. 3) which demonstrates an example approach to grouping according to one or more embodiments. Such grouping may be performed, for example, by the BID grouper 184 of FIG. 1.

Assume, for example, that a radar detection 122a has been selected as a sample around which grouping is to be performed. Rather than calculating distances to nearby points and selecting points within a certain distance threshold for inclusion in the group, grouping by the BID grouper 184 proceeds instead merely by selecting all radar detections 122 that share the same BID 130 with the sample 122a. In the illustrated example, detection 122a has been assigned a BID of 22, and only one other detection, 122b, has been assigned the same BID. Thus, a group may be formed for sample 122a by including the two detections that share the same BID, detections 122a and 122b.

According to one or more embodiments, groups may be formed not only from bins having the same BID 130 as that of the sample, but also from neighboring bins 330 in the Distance-Doppler map 300. Thus, for example, rather than having a group that contains only two detections, 122a and 122b, as above, a group may be formed not only from the bin having a BID of 22, but also from neighboring bins, e.g., bins having BIDs 11, 12, 13, 21, 23, 31, 32, and 33. One should appreciate that grouping can be performed flexibly and may include even greater numbers of bins, as circumstances warrant. The example shown is merely illustrative.

FIG. 7 shows an example arrangement for performing sampling in parallel, according to one or more embodiments. Such sampling may be performed by the BID sampler 182 of FIG. 1, for example. Once again, only a portion of the Distance-Doppler map 300 (FIG. 3) is shown.

Here, multiple workers 710, 720, 730, 740, 750, 760, 770, 780, and 790 are assigned to respective BIDs 11, 12, 13, 21, 22, 23, 31, 32, and 33 for performing sampling (and optionally grouping). The workers 710, 720, 730, 740, 750, 760, 770, 780, and 790 may be respective threads, CPU cores, or any other processing constructs that can work in parallel.

As previously stated, sampling may involve pseudorandomly selecting one or more detections 122 for each BID 130, i.e., from each bin 330. Thus, in an example, the task of sampling from one bin has no necessary dependency on the task of sampling from any of the other bins. Sampling of different bins may thus proceed independently, in parallel, and simultaneously. One should appreciate that options for parallel processing using the prior FPS approach are limited, as each sample depends on all of the previous samples, thwarting the ability to assign different samples to different workers independently.

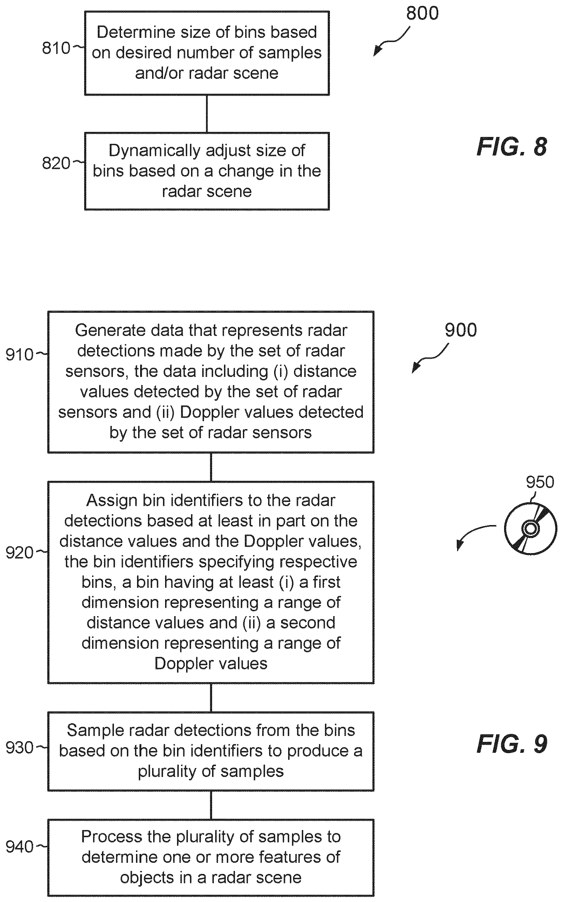

FIG. 8 shows an example method 800 of setting bin size according to one or more embodiments. The method 800 may be carried out, for example, by the set of sensors 110 and/or by the computerized apparatus 140 (FIG. 1).

At 810, the size of bins 330 is determined based at least in part on a desired number of samples and/or on one or more aspects of a radar scene, such as the density of radar detections 122 in Distance-Doppler space (FIG. 3). For example, if an encoder 180x is programmed to acquire 100 samples of a radar scene, the radar system 100 may divide the Distance-Doppler space into 100 uniformly-sized bins 330. Each bin 330 would then extend over one-tenth the full-scale range of distance and one-tenth the full-scale range of Doppler. But if the radar scene is expected to include different regions having different densities of radar detections 122, then smaller bins may be used, such as bins extending over one-twentieth or one-fiftieth the full-scale range in each dimension. This way, the acquired samples can more accurately reflect the shapes of smaller features. In some examples, BIDs 130 may be assigned at a fine level of granularity, but neighboring bins 330 may be coalesced into larger bins for purposes of sampling based on aspects of the radar scene, such as density. Many variants are contemplated.

At 820, the size of bins 330 is adjusted dynamically based on a change in the radar scene, such as a change in the density of radar detections 122 or other features. For example, the set of sensors 110 may monitor characteristics of the radar point cloud 126 and adjust the size of bins 330 to strike a more optimal balance between bin size and the performance of sampling, which may be assessed in terms of classification quality, computational efficiency, or other factors.

FIG. 9 shows an example method 900 of identifying features of objects in a physical environment 102 of a set of radar sensors 110 and provides an overview of some of the features described above. The method 900 is typically performed, for example, by the software constructs described in connection with the radar system 100 of FIG. 1, which reside in the memory 150 of the computerized apparatus 140 and are run by the set of processors 142. The various acts of method 900 may be ordered in any suitable way. Accordingly, embodiments may be constructed in which acts are performed in orders different from that illustrated, which may include performing some acts simultaneously.

At 910, data is generated that represents radar detections 122 made by the set of radar sensors 110. For example, the data may be provided in a data structure that represents a radar point cloud 126 or other radar scene. The data includes (i) distance values 310 detected by the set of radar sensors 110 and (ii) Doppler values 320 detected by the set of radar sensors 110.

At 920, bin identifiers (BIDs) 130 are assigned to the radar detections 122 based at least in part on the distance values 310 and the Doppler values 320. The BIDs 130 specify respective bins 330. A bin 330 has at least (i) a first dimension representing a range of distance values 310 and (ii) a second dimension representing a range of Doppler values 320. In some examples, the set of sensors 110 assigns the BIDs 130. In other examples, the computerized apparatus 140 assigns the BIDs 130.

At 930, radar detections 122 are sampled 520 (FIG. 5) from the bins 330 based on the BIDs 130 to produce a plurality of samples, such as the set of samples 532 shown in Table 530, or the results of reducing 540 or otherwise adjusting the number of samples, as shown in Table 550.

At 940, the plurality of samples is processed to determine one or more features of objects in the radar scene. For example, an encoder 180x may form groups around respective samples of the plurality of samples, and may input the samples and groups to a neural network 186, which operates to extract point features. The point features may be applied to successive encoders 180x and/or to the classification head 190, which generates object labels 192, e.g., labels that identify the object as a pedestrian, a two-wheeler, a car, a truck, or the like.

In some examples, the method 900 may be embodied as a computer program product including one or more non-transient, computer-readable storage media 950, such as a magnetic disk, magnetic tape, compact disk, DVD, optical disk, flash drive, solid state drive, SD (Secure Digital) chip or device, Application Specific Integrated Circuit (ASIC), Field Programmable Gate Array (FPGA), and/or the like. Any number of computer-readable media may be used. The media may be encoded with instructions which, when executed on one or more computers or other processors, perform the process or processes described herein. Such media may be considered articles of manufacture or machines, and may be transportable from one machine to another.

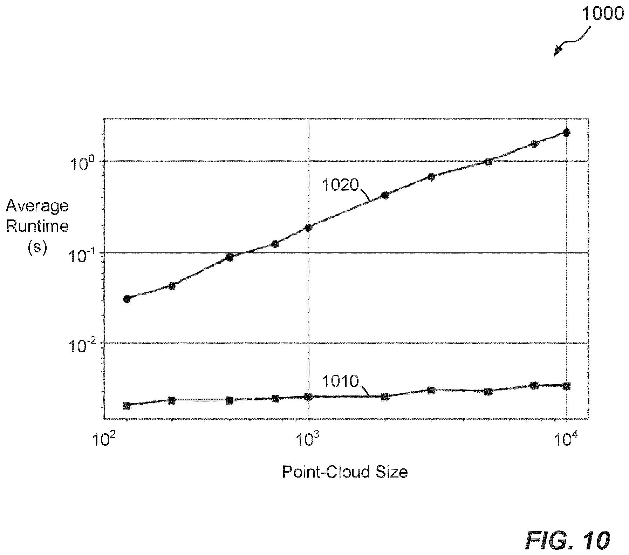

FIG. 10 is a graph 1000 that shows an example comparison of bin-based sampling to FPS according to one or more embodiments. The graph 1000 shows average runtime of sampling, measured in seconds, versus point-cloud size, measured in numbers of radar detections 122. Testing was performed based on a standard data set, and each point depicted on the graph 1000 is the average of ten different runs. Curve 1010 depicts results of bin-based sampling, and curve 1020 depicts results of FPS.

A consistent advantage of bin-based sampling is seen across all values of point-cloud size. It is observed that the complexity of bin-based sampling is O(m), where m is the number of bins. This is typically lower than the number of points in a point cloud. In contrast, FPS has a complexity of *O*(*nk*), where *k* is the number of samples and *n* is the total number of radar detections 122. Thus, in cases where *k* approaches *n,* the complexity of FPS is *O*(*n*²).

The performance benefits of bin-based sampling do not come at the cost of classification accuracy. Macro-averaged F1 scores were computed for four trained classes, vehicle, pedestrian, two-wheeler, and static objects, with virtually no difference observed between the two sampling techniques (both having scores between 87 and 88 percent). Thus, bin-based sampling provides clear performance benefits without sacrificing quality.

An improved technique has been described of sampling radar detections 122 in a radar scene. The technique includes assigning bin identifiers (BIDs) 130 to radar detections 122 based at least in part on distance (range) values 310 and Doppler (radial velocity) values 320 associated with the radar detections 122. The BIDs 130 uniquely identify respective bins 330 having at least a distance dimension and a Doppler dimension. The technique further includes selecting detections 122 based on the BIDs 130, such as selecting one detection per BID, two detections per BID, or the like. Uniform sampling across the entire radar scene can thus be achieved. Advantageously, sampling can proceed without the need for large numbers of distance calculations, as required by FPS, or even necessarily any distance calculations, thus reducing the workloads of computers. Less powerful computers can be used, or existing computers can be loaded with additional useful tasks.

Certain embodiments are directed to a device comprising control circuitry that includes a set of processors coupled to memory. The control circuitry is constructed and arranged to perform a method of identifying features of objects in a physical environment of a set of radar sensors. The method includes accessing a plurality of bin identifiers assigned to respective radar detections made by the set of radar sensors, the bin identifiers specifying respective bins, a bin having at least (i) a first dimension representing a range of distance values and (ii) a second dimension representing a range of Doppler values. The method further includes selecting radar detections based on the bin identifiers, the selecting producing a plurality of samples, and processing the plurality of samples to determine one or more features of the objects.

According to one or more further embodiments, a particular bin of the bins includes multiple radar detections, and selecting the radar detections includes selecting a radar detection from the particular bin using a pseudo-random process.

According to one or more further embodiments, selecting the radar detections further includes selecting at least a second radar detection from the particular bin using the pseudo-random process.

According to one or more further embodiments, selecting the radar detections further includes selecting at least one radar detection from each of the bins that contains at least one radar detection.

According to one or more further embodiments, the method further includes establishing a desired number of samples of the plurality of samples. According to such embodiments, selecting at least one radar detection from each of the bins produces a set of samples whose number exceeds the desired number of samples, and the method further includes pseudo-randomly removing samples from the set of samples such that only the desired number of samples remains.

According to one or more further embodiments, processing the plurality of samples includes forming a group of radar detections for a particular sample of the plurality of samples based at least in part on a bin identifier of the particular sample and bin identifiers of the radar detections, and providing the group as input to a neural network.

According to one or more further embodiments, the method further includes receiving the plurality of bin identifiers from the set of radar sensors.

According to one or more further embodiments, the method further includes receiving distance attributes and Doppler attributes of the respective radar detections from the set of radar sensors and assigning the plurality of bin identifiers to the respective radar detections based at least in part on the distance attributes and Doppler attributes of the respective radar detections.

Additional embodiments are directed to a method of identifying features of objects in a physical environment of a set of radar sensors. The method includes generating data that represents radar detections made by the set of radar sensors, the data including (i) distance values detected by the set of radar sensors and (ii) Doppler values detected by the set of radar sensors. The method further includes assigning bin identifiers to the radar detections based at least in part on the distance values and the Doppler values, the bin identifiers specifying respective bins, a bin having at least (i) a first dimension representing a range of distance values and (ii) a second dimension representing a range of Doppler values. The method still further includes sampling radar detections from the bins based on the bin identifiers to produce a plurality of samples, the samples thereafter processed to determine one or more features of the objects.

According to one or more further embodiments, sampling the radar detections includes selecting at least one radar detection from each of the bins that includes at least one radar detection.

According to one or more further embodiments, the method further includes determining a size of the bins based at least in part on a desired number of samples in the plurality of samples.

According to one or more further embodiments, determining the size of the bins is further based at least in part on a density of radar detections.

According to one or more further embodiments, the method further includes dynamically adjusting the size of the bins based at least in part on a change in the density of radar detections.

According to one or more further embodiments, the bins have at least one additional dimension representing any of (i) elevation angle, (ii) azimuth angle, and (iii) time, and assigning bin identifiers to the radar detections is further based on at least one of (i) elevation angle, (ii) azimuth angle, and (iii) time.

According to one or more further embodiments, sampling the radar detections includes performing sampling operations on multiple bins in parallel.

Still further embodiments are directed to a radar system that includes a set of radar sensors and a computerized apparatus communicatively coupled to the set of radar sensors. The radar system is constructed and arranged to transmit multiple radar signals into a physical environment of the radar system, receive radar reflections of the radar signals from the physical environment, and generate, based on the radar signals and the radar reflections, data that represents radar detections of objects in the physical environment, the data including (i) distance values detected by the set of radar sensors and (ii) Doppler values detected by the set of radar sensors. The radar system is further constructed and arranged to assign bin identifiers to the radar detections based at least in part on the distance values and the Doppler values, the bin identifiers representing bins that cover (i) respective ranges of distance values and (ii) respective ranges of Doppler values. In addition, the computerized apparatus is constructed and arranged to sample radar detections from the bins based on the bin identifiers, the sampling producing a plurality of samples, and to process the plurality of samples to determine one or more features of the objects.

According to one or more further embodiments, the computerized apparatus constructed and arranged to sample the radar detections is further constructed and arranged to select at least one radar detection from each of the bins that contains at least one radar detection.

According to one or more further embodiments, at least one of (i) the set of radar sensors and (ii) the computerized apparatus is further constructed and arranged to determine a size of the bins based at least in part on a desired number of samples in the plurality of samples.

According to one or more further embodiments, the bins have a first dimension representing distance, a second dimension representing Doppler, and at least one additional dimension representing any of (i) elevation angle, (ii) azimuth angle, and (iii) time. The computerized apparatus is further constructed and arranged to assign the bin identifiers based on at least one of (i) elevation angle, (ii) azimuth angle, and (iii) time.

According to one or more further embodiments, the computerized apparatus constructed and arranged to sample the radar detections based on the bin identifiers is further constructed and arranged to perform sampling operations on multiple bins in parallel.

Having described certain embodiments, numerous alternative embodiments or variations can be made. For example, although bin-based sampling has been described above as applying to all encoders 180, i.e., encoders 180a through 180n, this is merely an example. Alternatively, certain encoders 180 may continue to use FPS or other techniques, particularly in cases where an encoder 180 samples from a small set of radar detections 122. Thus, while bin-based sampling is preferred for all encoders 180, it is not required for all encoders 180.

Further, although embodiments have been described in connection with encoders 180 that perform feature detection, other embodiments may be constructed in the context of other functions, such as tracking, segmentation, or any function that involves uniform sampling 520 of radar detections 122 in a radar scene.

Further, although features have been shown and described with reference to particular embodiments hereof, such features may be included and hereby are included in any of the disclosed embodiments and their variants. Thus, it is understood that features disclosed in connection with any embodiment are included in any other embodiment.

As used throughout this document, the words *"comprising," "including," "containing,"* and *"having"* are intended to set forth certain items, steps, elements, or aspects of something in an open-ended fashion. Also, as used herein and unless a specific statement is made to the contrary, the word *"set"* means one or more of something. This is the case regardless of whether the phrase *"set of"* is followed by a singular or plural object and regardless of whether it is conjugated with a singular or plural verb. Also, a *"set of"* elements can describe fewer than all elements present. Thus, there may be additional elements of the same kind that are not part of the set. Further, ordinal expressions, such as *"first," "second," "third,"* and so on, may be used as adjectives herein for identification purposes. Unless specifically indicated, these ordinal expressions are not intended to imply any ordering or sequence. Thus, for example, a *"second"* event may take place before or after a *"first* event," or even if no first event ever occurs. In addition, an identification herein of a particular element, feature, or act as being a *"first"* such element, feature, or act should not be construed as requiring that there must also be a *"second"* or other such element, feature or act. Rather, the *"first"* item may be the only one. Also, and unless specifically stated to the contrary, *"based on"* is intended to be nonexclusive. Thus, *"based on"* should be interpreted as meaning *"based at least in part on"* unless specifically indicated otherwise. Further, although the term *"user"* as used herein may refer to a human being, the term is also intended to cover non-human entities, such as robots, bots, and other computer-implemented programs and technologies. Although certain embodiments are disclosed herein, it is understood that these are provided by way of example only and should not be construed as limiting.

Those skilled in the art will therefore understand that various changes in form and detail may be made to the embodiments disclosed herein without departing from the scope of the following claims.

## Claims

1. A device comprising control circuitry that includes a set of processors coupled to memory, the control circuitry constructed and arranged to perform a method of identifying features of objects in a physical environment of a set of radar sensors, the method including:
accessing a plurality of bin identifiers assigned to respective radar detections made by the set of radar sensors, the bin identifiers specifying respective bins, a bin having at least (i) a first dimension representing a range of distance values and (ii) a second dimension representing a range of Doppler values;
selecting radar detections based on the bin identifiers, the selecting producing a plurality of samples; and
processing the plurality of samples to determine one or more features of the objects.

2. The device of claim 1, wherein a particular bin of the bins includes multiple radar detections, and wherein selecting the radar detections includes selecting a radar detection from the particular bin using a pseudo-random process.

3. The device of claim 2, wherein selecting the radar detections further includes selecting at least a second radar detection from the particular bin using the pseudo-random process.

4. The device according to any preceding claim, wherein selecting the radar detections further includes selecting at least one radar detection from each of the bins that contains at least one radar detection.

5. The device of claim 4, wherein the method further includes establishing a desired number of samples of the plurality of samples, wherein selecting at least one radar detection from each of the bins produces a set of samples whose number exceeds the desired number of samples, and wherein the method further includes pseudo-randomly removing samples from the set of samples such that only the desired number of samples remains.

6. The device according to any preceding claim, wherein processing the plurality of samples includes:
forming a group of radar detections for a particular sample of the plurality of samples based at least in part on a bin identifier of the particular sample and bin identifiers of the radar detections; and
providing the group as input to a neural network.

7. The device according to any preceding claim, wherein the method further includes receiving the plurality of bin identifiers from the set of radar sensors.

8. The device according to any preceding claim, wherein the method further includes:
receiving distance attributes and Doppler attributes of the respective radar detections from the set of radar sensors; and
assigning the plurality of bin identifiers to the respective radar detections based at least in part on the distance attributes and Doppler attributes of the respective radar detections.

9. A method of identifying features of objects in a physical environment of a set of radar sensors, comprising:
generating data that represents radar detections made by the set of radar sensors, the data including (i) distance values detected by the set of radar sensors and (ii) Doppler values detected by the set of radar sensors;
assigning bin identifiers to the radar detections based at least in part on the distance values and the Doppler values, the bin identifiers specifying respective bins, a bin having at least (i) a first dimension representing a range of distance values and (ii) a second dimension representing a range of Doppler values; and
sampling radar detections from the bins based on the bin identifiers to produce a plurality of samples, the samples thereafter processed to determine one or more features of the objects.

10. The method of claim 9, wherein sampling the radar detections includes selecting at least one radar detection from each of the bins that includes at least one radar detection.

11. The method of claim 9 or 10, further comprising determining a size of the bins based at least in part on a desired number of samples in the plurality of samples.

12. The method according to any of claims 9 to 11, further comprising determining a size of the bins based at least in part on a density of radar detections.

13. The method of claim 12, further comprising dynamically adjusting the size of the bins based at least in part on a change in the density of radar detections.

14. The method according to any of claims 9 to 13, wherein the bins have at least one additional dimension representing any of (i) elevation angle, (ii) azimuth angle, and (iii) time, and wherein assigning bin identifiers to the radar detections is further based on at least one of (i) elevation angle, (ii) azimuth angle, and (iii) time.

15. The method according to any of claims 9 to 14, wherein sampling the radar detections includes performing sampling operations on multiple bins in parallel.
